# FASCICULE DE BREVET EUROPEEN

(11) **EP 4 251 453 B1**
(45) Date de publication et mention de la délivrance du brevet: **28.08.2024**
(21) Numéro de dépôt: 21810658.1
(22) Date de dépôt: 21.10.2021
(51) Int. Cl.: B60K 11/08, B60K 13/02

(54) **DISPOSITIF ANTI-RECYCLAGE À AMÉLIORATION D'ADMISSION D'AIR**
ANTI-UMWÄLZUNGS-VORRICHTUNG ZUR VERBESSERUNG DER LUFTZUFUHR
ANTI-RECIRCULATION DEVICE FOR IMPROVING AIR SUPPLY

(30) Priorité: 26.11.2020 FR 2012177
(43) Date de publication de la demande: 04.10.2023
(73) Titulaire: Stellantis Auto SAS, 78300 Poissy (FR)
(72) Inventeur: BUSSON, Nicolas, 70400 TREMOINS (FR); THIEBAULT, Ludovic, 70400 COUTHENANS (FR)
(86) Numéro de dépôt international: PCT/FR2021/051845
(87) Numéro de publication internationale: WO 2022/112674

(56) Documents cités:
- DE-A1- 102013 006 245
- FR-A1- 2 921 591
- FR-A1- 2 982 200
- JP-A- S61 271 121
- JP-B2- H0 773 981

## Description

L'invention concerne un dispositif anti-recyclage d'air destiné à être installé sur un véhicule, notamment en façade avant du véhicule, une façade avant équipée d'un tel dispositif ainsi qu'un véhicule équipé d'une telle façade avant ou d'un tel dispositif.

Il est connu d'installer à l'avant d'un véhicule un dispositif d'anti-recyclage qui évite à l'air chauffé par un radiateur de refroidissement d'être aspiré pour alimenter un moteur thermique. Ce type de dispositif est généralement placé à proximité du radiateur du véhicule, par exemple fixé sur une traverse supérieure de façade avant disposée juste au-dessus du radiateur. Le dispositif d'anti-recyclage comporte une ouverture d'entrée d'air par laquelle l'air rentre. L'air chemine ensuite dans un canal jusqu'à une ouverture d'évacuation d'air qui évacue l'air vers le conduit d'admission d'air du moteur. Avant d'entrée dans le dispositif anti-recyclage, l'air passe au travers des éléments de carrosserie en face avant du véhicule, par exemple par une entrée d'air située dans un parechoc ou par une calandre. Des chicanes sont installées dans le canal pour bloque les gouttelettes d'eau véhiculées par le flux d'air et éviter leur aspiration par le moteur, et des moyens sont prévus pour contrôler l'écoulement de l'eau dans le canal et éviter les écoulements par l'ouverture d'évacuation.

Par exemple, le document FR2921591 décrit un tel dispositif anti-recyclage.

Les solutions de l'art antérieur ont comme inconvénient de créer des freins au passage de l'air dus à la présence de chicane, ou nécessite de réaliser un dispositif anti-recyclage volumineux afin d'éviter les risques d'accumulation d'eau au niveau du passage de l'air vers l'entrée d'air destinée à apporter de l'air vers le moteur.

L'objectif de l'invention est de remédier à ces inconvénients. En particulier, un des buts de l'invention est de proposer un dispositif anti-recyclage d'air qui réduise les freins à l'aspiration de l'air destinée au véhicule, tout en permettant une évacuation efficace de l'eau et en limitant les risques que cette eau ne coule vers l'admission d'air pour le moteur. Un autre objectif est de proposer un dispositif de faible volume, facile à réaliser.

Ce but est atteint selon l'invention, grâce à un dispositif anti-recyclage d'air destiné à être installé sur une façade avant d'un véhicule pour l'alimentation en air frais d'un moteur, comportant un canal défini par une paroi de fond, deux parois latérales et une paroi supérieure, le dispositif comportant en outre une ouverture d'entrée d'air, une ouverture d'évacuation d'air sur l'une des parois latérales de sorte à faire circuler de l'air depuis l'ouverture d'entrée d'air jusqu'à l'ouverture d'évacuation dans le canal, et un passage d'extraction de l'eau ruisselant sur la paroi de fond, remarquable en ce que le dispositif comporte une paroi de surpression disposée approximativement perpendiculairement à la direction d'extension du canal, distante de la paroi de fond de sorte à permettre à de l'eau de s'écouler sur ladite paroi de fond, entre ladite paroi de fond et la paroi de surpression, ladite paroi de surpression étant disposée entre l'ouverture d'évacuation d'air et le passage d'extraction de l'eau.

Ainsi avantageusement, l'eau s'écoulant sur la paroi de fond, issue de l'air traversant le canal, peut s'écouler jusqu'au passage d'évacuation afin qu'elle ne s'accumule pas dans le canal, tandis que la paroi de surpression réduit la quantité d'air qui s'évacue du côté de ce passage d'extraction. En effet, la paroi de surpression génère une surpression dans le canal du côté de l'ouverture d'évacuation d'air, en particulier en situation de roulage d'un véhicule comportant un tel dispositif, situation dans laquelle l'air est forcé de rentrer dans le canal par l'ouverture d'entrée d'air du fait de la pression aérodynamique. Cette surpression augmente la quantité d'air sortant par l'ouverture d'extraction. La présence d'un seul canal, qui peut être longiligne, permet de réduire la dimension, et notamment la hauteur et la largeur du canal et donc du dispositif, facilitant son intégration dans le véhicule, la hauteur correspondant à la dimension dans un sens vertical au véhicule, et la largeur à une direction perpendiculaire à la direction d'extension du canal et à la direction verticale. L'espace entre la paroi de surpression et la paroi de fond permet le passage d'un écoulement d'eau.

Dans un mode de réalisation particulier de l'invention, l'ouverture d'évacuation est plus proche de la paroi de surpression que de l'ouverture d'entrée d'air, de préférence à proximité de la paroi de surpression.

Dans un autre mode de réalisation de l'invention, l'ouverture d'évacuation est disposée en hauteur par rapport à la paroi de fond, de sorte à ce qu'une partie de la paroi latérale s'étend entre ladite ouverture d'évacuation et la paroi de fond.

Cette disposition permet de s'assurer que l'eau s'écoulant dans le canal de fond ne passe pas par l'ouverture d'évacuation, même lorsque le véhicule n'est pas sur un plan horizontal ou lors d'accélération.

Dans un autre mode de réalisation de l'invention, la paroi de surpression s'étend d'une paroi latérale à l'autre.

Ainsi avantageusement, la paroi de surpression rigidifie le dispositif, et en particulier évite que les parois latérales se déforment.

Dans un autre mode de réalisation de l'invention, la paroi de surpression comporte deux jambes s'étendant jusqu'à paroi de fond, de préférence chacune le long d'une des parois latérales.

Dans un autre mode de réalisation de l'invention, le dispositif de recyclage comporte une paroi de blocage disposée dans le canal du côté de la paroi de surpression comportant le passage d'extraction, s'étendant transversalement dans le canal, distante de la paroi de fond de sorte à permettre à de l'eau de s'écouler sur ladite paroi de fond, entre ladite paroi de fond et la paroi de blocage.

Ainsi avantageusement, la paroi de blocage ajoute des obstacles au passage de l'air vers le passage d'extraction, de par exemple de type chicane, réduisant la quantité d'air s'évacuant par ce passage d'extraction. La quantité d'air passant au travers de l'ouverture d'évacuation est augmentée.

Dans un autre mode de réalisation de l'invention, la paroi de blocage s'étend depuis la paroi supérieure vers la paroi de fond.

En variante, l'ouverture d'entrée d'air est disposée à l'une des extrémités du canal et le passage d'extraction de l'eau à l'autre extrémité du canal.

Dans un autre mode de réalisation de l'invention, le dispositif anti-recyclage comporte un corps principal comprenant la paroi de fond et les parois latérales, et un capot fixé sur le corps principal et comprenant la paroi supérieure. Ainsi avantageusement, le dispositif est simple à produire, notamment lorsque la paroi de blocage est sur la paroi supérieure.

L'invention porte également sur un agencement de façade avant comportant une traverse de façade avant s'étendant suivant une direction d'extension et comportant une ouverture d'admission d'air traversant ladite traverse perpendiculairement à la direction d'extension, l'ouverture d'admission étant destinée à faire passer de l'air pour alimenter un équipement d'un côté à l'autre ladite traverse, et un dispositif anti-recyclage d'air tel que décrit précédemment, dont le canal est disposé le long de ladite traverse et dont le canal s'étend parallèlement à la direction d'extension et l'ouverture d'évacuation d'air est disposée en vis-à-vis de l'ouverture d'admission d'air.

Ainsi avantageusement, cette agencement est facilement inséré dans une face avant de véhicule, le dispositif anti-recyclage étant contre la traverse de façade avant et l'ouverture d'admission dans la traverse. De plus, la paroi de fond du canal peut ainsi servir de paroi de séparation entre l'air à guider vers l'ouverture d'admission et l'air entrant par la face avant et à diriger vers un radiateur disposé sous la traverse de façade avant.

L'invention porte également sur un véhicule comportant un dispositif anti-recyclage d'air ou un agencement de façade avant tels que décrit précédemment.

L'invention sera mieux comprise à la lecture de la description qui va suivre, donnée uniquement à titre d'exemple et faite en se référant aux dessins annexés, sur lesquels :
[Fig.1] représente l'avant d'un véhicule, avec une façade avant illustrée en transparence comportant un dispositif anti-recyclage suivant l'invention.
[Fig.2] représente une vue en perspective d'un dispositif anti-recyclage suivant l'invention sans le capot.
[Fig.3] représente une vue en coupe AA suivant un plan vertical défini dans la figure 2, le dispositif étant équipé du capot.

Les dessins sont des représentations schématiques pour faciliter la compréhension de l'invention. Les composants ne sont pas forcément représentés à l'échelle. Les mêmes références correspondent aux mêmes composants d'une figure à l'autre. L'axe X représente la direction longitudinale du véhicule, l'axe Y la direction transversale et l'axe Z la direction verticale. Les directions avant, arrière, haut, bas sont prises dans le référentiel du véhicule.

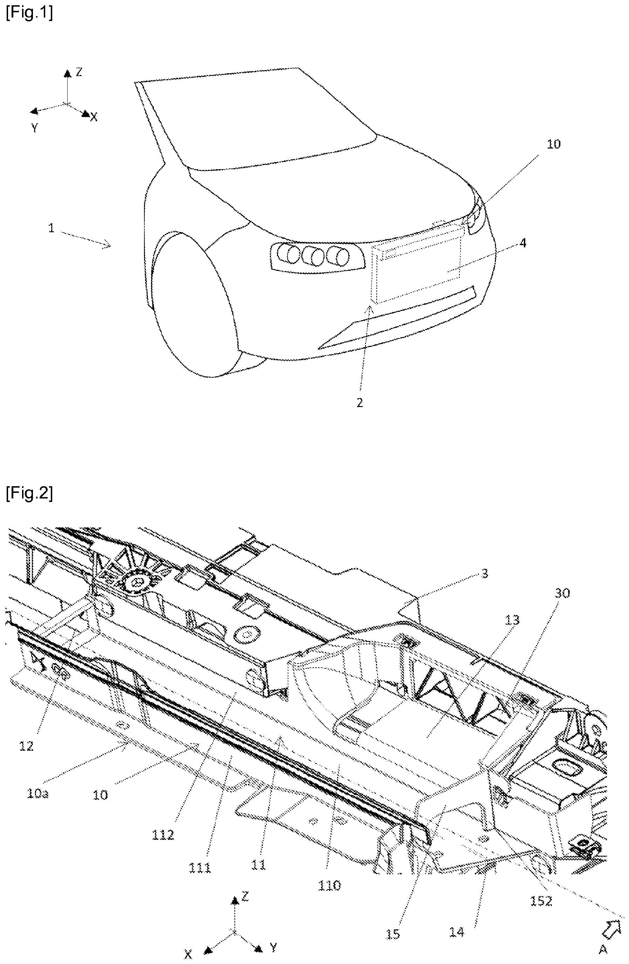

La figure 1 montre l'avant d'un véhicule 1, équipé d'une façade avant 2. La façade avant comprend une traverse supérieur 3, illustrée en figure 2, sous laquelle est installé un radiateur 4 de refroidissement, par exemple dédié au refroidissement d'un moteur thermique propulsant le véhicule 1. Un dispositif anti-recyclage 10 est fixé à la traverse 3. Le dispositif anti-recyclage 10 permet d'apporter de l'air vers une ouverture d'admission destinée à apporter l'air vers le moteur, sans être mélangé avec de l'air réchauffé par le radiateur 4.

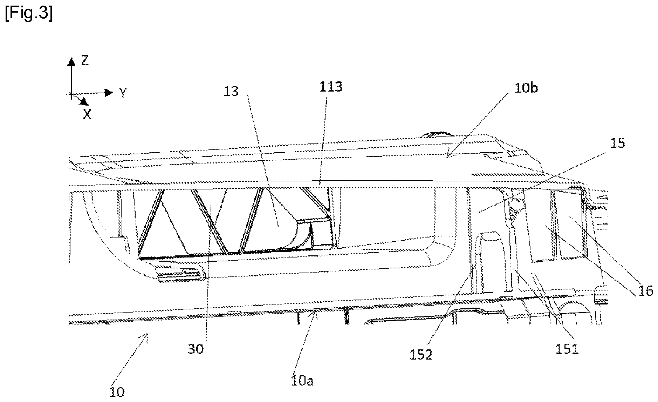

Comme illustré en figure 2 et 3, le dispositif anti-recyclage d'air 10 comporte un canal 11 défini par une paroi de fond 110, deux parois latérales 111, 112, une première paroi latérale 111 et une deuxième paroi latérale 112, et une paroi supérieur 113. En figure 2, le dispositif 10 est représenté sans la paroi supérieure de manière à visualiser l'intérieur. Le dispositif 10 comporte en outre une ouverture d'entrée d'air 12, une ouverture d'évacuation 13 d'air située sur la deuxième paroi latérale 112. L'air circule depuis l'ouverture d'entrée 12 d'air jusqu'à l'ouverture d'évacuation 13 au traverse du canal 11. Un passage d'extraction 14 de l'eau ruisselant sur la paroi de fond 110 permet d'évacuer cette eau. Une paroi de surpression 15 est disposée approximativement perpendiculairement à la direction d'extension du canal 11, distante de la paroi de fond 110 de sorte à permettre à de l'eau de s'écouler sur ladite paroi de fond 110, entre ladite paroi de fond 110 et la paroi de surpression 15. La paroi de surpression 15 est située entre l'ouverture d'évacuation d'air 13 et le passage d'extraction 14 de l'eau.

La paroi de surpression 15 s'étend sensiblement perpendiculairement à la direction d'extension du canal 11, c'est-à-dire qu'elle coupe dans la largeur une partie de la section transversale du canal 11 afin de réduire sa section localement. De cette manière, elle montre une face en travers de la direction d'extension du canal 11. Par exemple, la paroi de surpression 15 s'étend avec un angle compris entre soixante degrés et cent-vingt degrés par rapport à cette direction d'extension. Par exemple, la paroi de surpression est sensiblement perpendiculaire à la paroi de fond et forme un angle de 90° avec la direction d'extension du canal 11. Dans les figures, le canal 11 s'étend parallèlement selon l'axe transversal Y du véhicule 1.

Comme illustré en figure 2, l'ouverture d'évacuation 13 est plus proche de la paroi de surpression 15 que de l'ouverture d'entrée d'air 12. Par exemple, l'ouverture d'entrée d'air est à proximité de la paroi de surpression 15, c'est-à-dire à moins de 5 centimètres de la paroi de surpression 15, ou encore elle peut être accolée à la paroi de surpression 15. L'ouverture d'évacuation 13 est disposée en hauteur par rapport à la paroi de fond 101, de sorte à ce qu'une partie de la deuxième paroi latérale 112 s'étend entre ladite ouverture d'évacuation 13 et la paroi de fond 110. Plus précisément, une fois installée sur le véhicule 1, l'ouverture d'évacuation 13 est disposée plus haute que la partie de la paroi de fond 110 située à sa verticale. La deuxième paroi latérale 112 s'étend entre l'ouverture d'entrée d'air 13 et la paroi de fond 110.

La paroi de surpression 15 s'étend de la première paroi latérale 111 à la deuxième paroi latérale 112. C'est-à-dire qu'elle est jointive de ces parois latérales 111 et 112.

Dans le mode de réalisation des figures 2 et 3, la paroi de surpression 15 comporte deux jambes 151, 152 s'étendant jusqu'à paroi de fond 110, chacune le long d'une des parois latérales 111, 112. Ces jambes 151, 152 permettent d'apporter une rigidification entre la paroi de surpression 15 et les paroi latérales 111, 112 lorsque ladite paroi de surpression 15 est jointive de ces parois latérales 111, 112.

En variante, la paroi de surpression 15 n'est pas jointive des parois latérales 111, 112, et les jambes permettent de soutenir ladite paroi de surpression 15 depuis la paroi de fond 110.

Le dispositif anti-recyclage comporte une paroi de blocage 16 disposée dans le canal 11, du côté de la paroi de surpression 15 comportant le passage d'extraction 14. Par exemple, la paroi de blocage est disposée entre la paroi de surpression 15 et le passage d'extraction 14. Elle s'étend transversalement dans le canal 11, distante de la paroi de fond 110 de sorte à permettre à de l'eau de s'écouler sur ladite paroi de fond 110, entre ladite paroi de fond 110 et la paroi de blocage 16. Elle est distante de la paroi de surpression 15. Elle s'étend par exemple depuis la paroi supérieure 113, vers la paroi de fond 110, entre les paroi latérales 111, 112. Dans le mode de réalisation des figures 2 et 3, le dispositif anti-recyclage comporte deux parois de blocages 16 disposées parallèlement entre elles. Dans une variante, la paroi de blocage 16, ou les parois de blocage lorsqu'il y en a plusieurs, est au contact avec les parois latérales 111, 112. Dans une autre variante, elle est liée aux parois latérales 111, 112, de la même manière que la paroi de surpression 15. Lorsqu'il y a plusieurs parois de blocage 16, chacune peut avoir une conception différente : par exemple l'une s'étend depuis la paroi supérieure 113 et l'autre s'étend depuis l'une des faces latérales 111 à l'autre face latérale 112.

Comme illustré en figure 3, le dispositif anti-recyclage comporte un corps principal 10a qui comprend la paroi de fond 110, les parois latérales 111, 112, et un capot 10b fixé sur le corps principal 10a. Le capot 10b comprend la paroi supérieure 113. Dans le mode de réalisation des figures 2 et 3, les parois de blocage 16 sont donc portées par le capot 10b.

Dans le mode de réalisation des figures 2 et 3, la traverse 3 de façade avant 2 s'étend suivant la direction Y transversale au véhicule 1. La traverse 3 comporte une ouverture d'admission 30 d'air traversant ladite traverse 3 perpendiculairement à la direction Y, de sorte à passer de l'avant de la traverse 3, c'est-à-dire de la face de la traverse 3 orientée vers l'avant du véhicule 1, à l'arrière de la traverse 3, c'est-à-dire la face de la traverse 3 orientée vers l'arrière du véhicule 1. Cette ouverture d'admission 30 est par exemple sensiblement parallèle à l'axe longitudinal X du véhicule 1.

Le dispositif anti-recyclage d'air 10 est disposé avec le canal 11 le long de la traverse 3, s'étendant parallèlement à la direction Y. L'ouverture d'évacuation 13 d'air est disposée en vis-à-vis de l'ouverture d'admission d'air 30. La traverse 3 et le dispositif anti-recyclage d'air 10 fixé à ladite traverse 3 forme un agencement de façade avant 2.

Comme illustré en figure 3, l'ouverture d'évacuation d'air 13 se continue par des parois à l'extérieur du canal 11, formant un conduit avec une partie du le couvercle 10b. Le conduit débouche face à l'ouverture d'admission d'air 30.

Dans une variante, la paroi de surpression 15 est issue de la paroi supérieure, non jointive des parois latérales.

## Revendications

1. Dispositif anti-recyclage d'air (10) destiné à être installé sur une façade avant (2) d'un véhicule (1) pour l'alimentation en air frais d'un moteur, comportant un canal (11) défini par une paroi de fond (110), deux parois latérales (111, 112) et une paroi supérieure (113), le dispositif comportant en outre une ouverture d'entrée d'air (12), une ouverture d'évacuation (13) d'air sur l'une des parois latérales (112) de sorte à faire circuler de l'air depuis l'ouverture d'entrée (12) d'air jusqu'à l'ouverture d'évacuation (13) dans le canal (11), et un passage d'extraction (14) de l'eau ruisselant sur la paroi de fond (110), **caractérisée en ce que** le dispositif (10) comporte une paroi de surpression (15) disposée approximativement perpendiculairement à la direction d'extension du canal (11), distante de la paroi de fond (110) de sorte à permettre à de l'eau de s'écouler sur ladite paroi de fond (110), entre ladite paroi de fond (110) et la paroi de surpression (15), ladite paroi de surpression étant disposée entre l'ouverture d'évacuation d'air (13) et le passage d'extraction (14) de l'eau.

2. Dispositif anti-recyclage (10) suivant la revendication précédente, dont l'ouverture d'évacuation (13) est plus proche de la paroi de surpression (15) que de l'ouverture d'entrée d'air (12), de préférence à proximité de la paroi de surpression (15).

3. Dispositif anti-recyclage (10) suivant l'une des revendications précédentes, dont l'ouverture d'évacuation (13) est disposée en hauteur par rapport à la paroi de fond (101), de sorte à ce qu'une partie de la paroi latérale (112) s'étend entre ladite ouverture d'évacuation (13) et la paroi de fond (110).

4. Dispositif anti-recyclage (10) suivant l'une des revendications précédentes, dont la paroi de surpression (15) s'étend d'une paroi latérale (111, 112) à l'autre.

5. Dispositif anti-recyclage (10) suivant l'une des revendications précédentes, dont la paroi de surpression (15) comporte deux jambes (151, 152) s'étendant jusqu'à paroi de fond (110), de préférence chacune le long d'une des parois latérales (111, 112).

6. Dispositif anti-recyclage (1) suivant l'une des revendications précédentes, comportant une paroi de blocage (16) disposée dans le canal (11) du côté de la paroi de surpression (15) comportant le passage d'extraction (14), s'étendant transversalement dans le canal (11), distante de la paroi de fond (110) de sorte à permettre à de l'eau de s'écouler sur ladite paroi de fond (110), entre ladite paroi de fond (110) et la paroi de blocage (16).

7. Dispositif anti-recyclage (10) suivant la revendication précédente, dont la paroi de blocage (16) s'étend depuis la paroi supérieure (113) vers la paroi de fond (110).

8. Dispositif anti-recyclage (10) suivant l'une des revendications précédentes, comportant un corps principal (10a) comprenant la paroi de fond (110) et les parois latérales (111, 112), et un capot (10b) fixé sur le corps principal et comprenant la paroi supérieure (113).

9. Agencement de façade avant (2) comportant une traverse (3) de façade avant s'étendant suivant une direction d'extension (Y) et comportant une ouverture d'admission (30) d'air traversant ladite traverse (3) perpendiculairement à la direction d'extension (Y), l'ouverture d'admission étant destinée à faire passer de l'air pour alimenter un équipement d'un côté à l'autre ladite traverse (3), et un dispositif anti-recyclage d'air (10) suivant l'une des revendications précédentes, dont le canal (11) est disposé le long de ladite traverse (3) et dont le canal s'étend parallèlement à la direction d'extension (Y) et l'ouverture d'évacuation (13) d'air est disposée en vis-à-vis de l'ouverture d'admission d'air (30).

10. Véhicule (1) comportant un dispositif anti-recyclage d'air (10) suivant l'une des revendications de 1 à 8, ou un agencement de façade avant (2) suivant la revendication 9.

## Patentansprüche

1. Luftrückführverhinderungsvorrichtung (10) zum Einbau in eine vordere Fassade (2) eines Fahrzeugs (1) zur Frischluftversorgung eines Motors, mit einem durch eine Bodenwand (110), zwei Seitenwände (111, 112) und eine obere Wand (113) definierten Kanal (11), wobei die Vorrichtung ferner eine Vorrichtung aufweist Lufteinlassöffnung (12), eine Luftauslassöffnung (13) an einer der Seitenwände (112), um Luft von der Lufteinlassöffnung (12) zur Auslassöffnung (13) im Kanal (11) zu leiten, und einen Luftauslasskanal (14) Wasser, das auf der Bodenwand (110) abläuft, **dadurch gekennzeichnet, dass** die Vorrichtung (10) eine Überdruckwand (15) aufweist, die etwa senkrecht zur Erstreckungsrichtung des Kanals (11) angeordnet ist, die von der Bodenwand (110) beabstandet ist, sodass Wasser auf der Bodenwand (110) zwischen Die Bodenwand (110) und die Überdruckwand (15) sind zwischen der Luftauslassöffnung (13) und dem Wasserentnahmekanal (14) angeordnet.

2. Rückführverhinderungsvorrichtung (10) nach dem vorhergehenden Anspruch, deren Auslassöffnung (13) näher an der Überdruckwand (15) als an der Lufteinlassöffnung (12), vorzugsweise nahe der Überdruckwand (15), liegt.

3. Rückführverhinderungsvorrichtung (10) nach einem der vorhergehenden Ansprüche, deren Auslassöffnung (13) in der Höhe zur Bodenwand (101) angeordnet ist, sodass sich ein Teil der Seitenwand (112) zwischen der Auslassöffnung (13) und der Bodenwand (110) erstreckt.

4. Antirückführvorrichtung (10) nach einem der vorhergehenden Ansprüche, deren Überdruckwand (15) sich von einer Seitenwand (111, 112) zur anderen erstreckt.

5. Rückführverhinderungsvorrichtung (10) nach einem der vorhergehenden Ansprüche, deren Druckwand (15) zwei Schenkel (151, 152) aufweist, die sich bis zur Bodenwand (110) erstrecken, vorzugsweise jeweils entlang einer der Seitenwände (111, 112).

6. Rückführverhinderungsvorrichtung (1) nach einem der vorhergehenden Ansprüche, mit einer Sperrwand (16), die in dem Kanal (11) auf der Seite der Überdruckwand (15) angeordnet ist, die den quer in den Kanal (11) verlaufenden Ausziehkanal (14) aufweist, der von der Bodenwand (110) beabstandet ist Wasser, das auf der Bodenwand (110) zwischen der Bodenwand (110) und der Sperrwand (16) fließt.

7. Antirückführvorrichtung (10) nach dem vorhergehenden Anspruch, deren Sperrwand (16) sich von der oberen Wand (113) zur unteren Wand (110) erstreckt.

8. Rückführverhinderungsvorrichtung (10) nach einem der vorhergehenden Ansprüche, umfassend einen Hauptkörper (10a), der die Bodenwand (110) und die Seitenwände (111, 112) umfasst, und eine Abdeckung (10b), die an dem Hauptkörper befestigt ist und die obere Wand (113) umfasst.

9. Frontfassadenanordnung (2) mit einem vorderen Fassadenquerträger (3), der sich in einer Erstreckungsrichtung (Y) erstreckt und eine Lufteinlassöffnung (30) aufweist, die durch den Querträger (3) senkrecht zur Erstreckungsrichtung (Y) verläuft, wobei die Einlassöffnung dazu dient, Luft zu durchströmen, um eine Ausrüstung von einer Seite zu der Querträger zu zuführen (Seite) 3) und eine Luftreinigungsvorrichtung (10) nach einem der vorhergehenden Ansprüche, deren Kanal (11) entlang der Traverse (3) angeordnet ist und dessen Kanal parallel zur Erstreckungsrichtung (Y) verläuft und die Luftauslassöffnung (13) gegenüber der Lufteinlassöffnung (30) angeordnet ist.

10. Fahrzeug (1) mit einer Luftrückführverhinderungseinrichtung (10) nach einem der Ansprüche 1 bis 8 oder einer vorderen Fassadenanordnung (2) nach Anspruch 9.

## Claims

1. An air recycling device (10) intended to be installed on a front (2) of a vehicle (1) for the fresh air supply of an engine, consisting of a channel (11) defined by a bottom wall (110), two side walls (111, 112) and a top wall (113), the opening having in addition one air entry (12) means an air escape opening (13) on one of the side walls (112) to circulate air from the air inlet opening (12) to the outlet opening (13) in the canal (11), and an extraction passage (14) from the water flowing on the bottom wall (110), characterized that the device (10) has an overpressure wall (15) arranged approximately perpendicular to the canal extension direction (11), distant from the bottom wall (110) so as to allow water to flow on the bottom wall (110), between the said bottom wall bottom wall (110) and overpressure wall (15), the said overpressure wall being arranged between the air drain opening (13) and the water extraction passage (14).

2. The anti-recycling device (10) following the previous claim, the discharge opening (13) of which is closer to the pressure wall (15) than to the air inlet opening (12), preferably close to the pressure wall (15).

3. An anti-recycling device (10) following one of the previous claims, the opening of which (13) is arranged in height relative to the bottom wall (101), so that part of the side wall (112) extends between the said escape opening (13) and the bottom wall (110).

4. Anti-recycling device (10) in accordance with one of the previous claims, whose pressure wall (15) extends from one side wall (111, 112) to the other.

5. Anti-recycling device (10) following one of the previous claims, whose pressure wall (15) has two legs (151, 152) extending to the bottom wall (110), preferably each along one of the side walls (111, 112).

6. Anti-recycling device (1) following one of the previous claims, containing a blocking wall (16) arranged in the channel (11) on the side of the pressure wall (15) with the extraction passage (14), extending across the channel (11), distant from the bottom wall (110) so as to enable the Water to flow on the said bottom wall (110), between the said bottom wall (110) and the blocking wall (16).

7. Anti-recycling device (10) following the previous claim, whose blocking wall (16) extends from the top wall (113) to the bottom wall (110).

8. Anti-recycling device (10) following one of the previous claims, consisting of a main body (10a) including the bottom wall (110) and the side walls (111, 112), and a cover (10b) attached to the main body and including the upper wall (113).

9. Front-facing arrangement (2) having a front-facing cross (3) extending in an extension direction (Y) and having an inlet opening (30) of air passing through that cross (3) perpendicular to the extension direction (Y), the inlet opening being intended to pass air to supply equipment from one side to the other cross (3), and an air recycling device (10) in accordance with one of the preceding claims, the canal (11) of which is located along the said cross (3) and whose canal extends parallel to the extension direction (Y) and the exhaust opening (13) of air is arranged opposite the air intake opening (30).

10. Vehicle (1) having an air recycling device (10) following one of the claims 1 to 8, or a front layout (2) following claim 9.
